(19) Europäisches Patentamt
European Patent Office
Office européen des brevets

(11) **EP 4 276 694 A1**

(12) **EUROPEAN PATENT APPLICATION**

(43) Date of publication:
**15.11.2023 Bulletin 2023/46**

(21) Application number: **22386027.1**

(22) Date of filing: **11.05.2022**

(51) International Patent Classification (IPC):
**G06N 3/04** *(2023.01)* **H04N 19/31** *(2014.01)*
**H04N 19/33** *(2014.01)*

(52) Cooperative Patent Classification (CPC):
**H04N 19/31; G06N 3/045; H04N 19/33**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **DeepMind Technologies Limited London EC4A 3TW (GB)**

(72) Inventors:
• **ASSAEL, Ioannis Alexandros London N1C 4AG (GB)**
• **SHILLINGFORD, Brendan London N1C 4AG (GB)**

(74) Representative: **Martin, Philip John Marks & Clerk LLP 62-68 Hills Road Cambridge CB2 1LA (GB)**

(54) **VARIABLE RESOLUTION VARIABLE FRAME RATE VIDEO CODING USING NEURAL NETWORKS**

(57) Systems and methods for encoding video, and for decoding video at an arbitrary temporal and/or spatial resolution. The techniques use a scene representation neural network that, in implementations, is configured to represent frames of a 2D or 3D video as a 3D model encoded in the parameters of the neural network.

Fig. 1

## Description

BACKGROUND

This specification relates to video coding using neural networks.

Neural networks are machine learning models that employ one or more layers of models to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

SUMMARY

This specification describes systems and methods, implemented as computer programs on one or more computers in one or more locations, that can encode and decode video.

In one aspect there is described a computer-implemented method of decoding video i.e. a sequence of images. The method obtains encoded video data for a video comprising a plurality of video frames, e.g. from storage or over a communications link. The video frames comprise a sequence of sets of video frames, each set of video frames comprising the video frames between a respective pair of key frames. The set may, but need not, include one or both of the key frames themselves.

The encoded video data for each set of video frames comprises parameters, e.g. weights, of a scene representation neural network that encodes the video frames between the respective pair of key frames. The scene representation neural network is configured to receive a representation of a frame time defining a time between the respective pair of key frames, and to process the representation of the frame time to generate a scene representation output for rendering an image that depicts a scene encoded by the parameters of the scene representation neural network at the frame time.

For each set of video frames in the encoded video data the method processes a representation of each of a set of frame times between the respective pair of key frames for the set of video frames, using the scene representation neural network, to generate the scene representation output for each of the frame times. A set of image frames, one for each of the frame times, is rendered using the scene representation output for each of the frame times, and the rendered set of image frames provides the decoded video.

There is also described a computer-implemented method of encoding video. The method obtains source video, the source video comprising a sequence of sets of source video frames, each set of source video frames comprising the source video frames between a respective pair of source video key frames. The source video is encoded to obtain encoded video data by, for each set of source video frames between a respective pair of source video key frames, training an encoder scene representation neural network, using each of the source video frames, to generate an encoder scene representation output for rendering an image that depicts a scene at a respective source frame time of the source video frame. The scene is encoded by parameters of the encoder scene representation neural network. The encoded video data may be stored or transmitted for later decoding.

The subject matter described in this specification can be implemented in particular embodiments so as to realize one or more of the following advantages.

The video decoding method and system described in this specification allows video decoding at an arbitrary frame rate, in general different to a frame rate of the source video. Thus the decoded video frame rate can be selected according to the needs of a particular application, and can be dynamically adapted e.g. according to a content of the video, so that a higher frame rate is used for segments of the video that are changing more rapidly.

The described techniques also facilitate decoding at an arbitrary spatial resolution. Thus a spatial resolution of the decoded video may be matched to the content of the video within any particular image frame.

The described techniques further facilitate decoding at a combination of an arbitrary spatial resolution and an arbitrary temporal resolution. Thus a spatial and temporal resolution of the decoded video may be matched to the content of the video within any particular part of an image frame and across image frames, e.g. to selectively decode some parts of image frames at increased spatial and temporal resolution whilst using a lower spatial and temporal resolution for other parts of the image frames.

In some implementations of the system the scene representation neural network defines a geometric model of a scene depicted by the video. That is, the scene representation neural network may be configured to receive a representation of a viewing direction, and optionally also a representation of a spatial location in the scene. This facilitates selecting both a temporal and a spatial resolution for the decoded video, and dynamically adapted these according to the content of the video. For example this facilitates decoding one or more parts of an image frame that include more detail, or that are selected by a viewer's gaze direction, at a higher spatial resolution than other parts of the image frame. This also facilitates adaption of both the spatial and temporal resolution so that a higher frame rate is used selectively for one or more parts of an image frame that include more detail and/or are changing faster than other parts of the image frame.

Some implementations of the system are particularly useful in virtual reality systems as they facilitate efficient use of computational resources.

Implementations of the system can also allow decoding video at a higher spatial or temporal resolution than the original source video. Thus the described techniques can also be used for up-sampling source video content.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a block diagram of an example video decoding system.
FIG. 2 illustrates an example of rendering of an image of a scene.
FIG. 3 schematically illustrates encoding and decoding video using a variable frame rate.
FIG. 4 schematically illustrates decoding video using variable spatial resolution.
FIG. 5 schematically illustrates use of an example video decoding system in a virtual reality system.
FIG. 6 is a flow diagram of an example process for encoding video.
FIG. 7 is a flow diagram of an example process for decoding video.

Like reference numbers and designations in the various drawings indicate like elements.

DETAILED DESCRIPTION

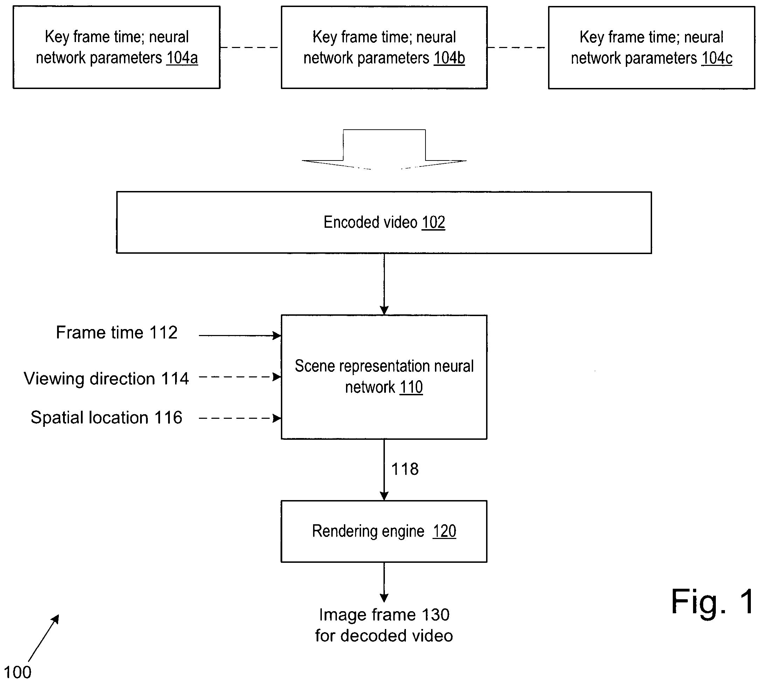

FIG. 1 is a block diagram of an example video decoding system 100 that can decode encoded video 102 with a variable frame rate and, in implementations, with a variable spatial resolution. The video decoding system 100 is an example of a system implemented as computer programs on one or more computers in one or more locations in which the systems, components, and techniques described below are implemented.

The video that has been encoded comprises a plurality of source video frames. Some of the source video frames are key frames, and a set of source video frames between successive key frames is encoded into the parameters of a scene representation neural network 110. The encoded video data comprises the parameters of the scene representation neural network 110 for each set of video frames 104a,b,c. Optionally the encoded video data also includes a key frame time for each key frame e.g. to allow random rather access into the decoded video.

The scene representation neural network 110 is configured to receive a representation of a frame time 112 defining a time between the respective pair of key frames. The scene representation neural network 110 processes the representation of the frame time, using the parameters for the set of video frames from the encoded video, to generate a scene representation output 118 for rendering an image that depicts a scene at the frame time.

More particularly, the parameters of the scene representation neural network 110 for a set of source video frames comprise parameters of a scene representation neural network, later an encoder scene representation neural network, that has been trained to reproduce each of the set of source video frames whilst conditioned on a respective source video frame time. The scene representation neural network 110 acts as a function approximator and can reproduce not only scenes at the source frames times, but scenes at arbitrary times between the key frame times. The encoder scene representation neural network may have been trained using any suitable image reconstruction objective function.

The scene representation neural network 110 may comprise any suitable type of neural network such as a convolutional neural network, or a multilayer perceptron (MLP), or a neural network having a more complex architecture.

The scene representation output 118 is processed by a rendering engine 120 to generate an image that depicts a scene at the frame time 112, i.e. to generate an image frame 130 at the frame time, for a decoded video output.

For each set of video frames in the encoded video data the system processes a representation of each of a set of frame times to generate a corresponding set of image frames to provide the decoded video output. That is, the scene representation output 118 is generated at least once for each frame time in the set of frame times, which together define a sequence of frames to provide the decoded video output. The frame times are, in general, different to the source video frame times.

As used herein an image can generally be represented, e.g., as an array of pixels, where each pixel is associated with a respective spatial location in the image and corresponds to a respective vector of one or more numerical values representing image data at the spatial location. For example, a two-dimensional (2D) RGB image can be represented by a 2D array of pixels, where each pixel is associated with a pixel value e.g. a respective three-dimensional (3D) vector of values representing the intensity of red, green, and blue colors at the spatial location corresponding to the pixel in the image. In a similar way, a 3D image can be represented by a 3D array of pixels, or a 3D image can be represented as a stereoscopic image, or as a 2D image in combination with a depth map, as described further later. In general any color space may be used for a color image e.g. an RGB color space, a YUV color space, an HSL color space, an HSV color space, or a Rec. 709 color space. A scene can refer, e.g., to a real world environment or to a simulated environment.

As described above, the scenes depicted in the set of source video frames are encoded into the parameters of the scene representation neural network 110, conditioned on the respective source video frame times, and the scene for an arbitrary frame time is generated by processing a representation of the frame time using of the scene representation neural network 110.

In some implementations the scene representation output itself defines the image frame 130. For example a neural network may be trained to reproduce an image at a frame time conditioned on the frame time.

In some implementations, during training the scene representation neural network 110 is also conditioned on a representation of a viewing direction 114, and is optionally further conditioned on a representation of a (3D) spatial location 116 in the depicted scene. This facilitates decoding video at arbitrary spatial as well as temporal resolution.

Thus in some implementations the scene representation neural network 110 is configured to process a representation of a viewing direction and the representation of the frame time to generate the scene representation output 118. The pixel value of a pixel of the image frame can then be determined by determining a viewing direction for the pixel, where the viewing direction corresponds to a direction of a ray into the scene from the pixel i.e. from a corresponding pixel of an image depicted by the image frame. This can be understood by considering the image as defined on the focal surface of a notional camera: the camera converts an angle of incoming light to its optical axis, to a displacement on the focal surface. The scene representation neural network 110 processes the representation of the viewing direction for the pixel, and the representation of the frame time for the image frame 130, to generate the scene representation output 118, which partly or wholly determines the pixel value. This is repeated for each pixel of the image frame 130 and the rendering engine 120 can render the image frame 130 by combining the pixel values for each pixel.

The pixel values generated in this way are independent of one another and thus pixel values can be generated for an arbitrary set of pixels. For example some regions of an image frame, e.g. those with a relatively higher measure of spatial detail, may be rendered at a higher spatial resolution than others. As another example or some image frames, or parts of image frames, e.g. those with a relatively higher measure of a rate of change of spatial detail, may be rendered at a higher spatial resolution than others.

In some implementations the scene representation neural network 110 is configured to process a representation of a 3D spatial location in the scene, as well as the representation of a viewing direction and the representation of the frame time, to generate the scene representation output 118. In these implementations, although the image frame 130 represents a 2D image the scene representation neural network 110 defines a 3D model of a 3D scene represented as the 2D image. The rendering engine 120 then renders the 2D image for the image frame 130 according to the viewing direction and frame time, by combining 3D information from the scene representation neural network 110. Modelling the 3D space of the scene, rather than the 2D image from any particular viewpoint, implicitly ensures consistency between different viewpoints as well as generalizing better to new viewpoints.

The parameters of the scene representation neural network may encode a representation of the scene over a three dimensional spatial volume, and the scene representation output may define a light level, e.g. radiance, e.g. for each of a set of pixel color values, emitted from the spatial location along the viewing direction; and an opacity at the spatial location. In implementations the scene representation output 118 comprises an RGB$\alpha$ (RGB alpha) value for a 3D spatial location, and these values are combined along the viewing direction e.g. using alpha-compositing, or a similar technique such as a differentiable approximation to alpha-compositing, to render the 2D image frame.

In some implementations the pixel value of a pixel in the image frame 130 may be determined by determining a plurality of spatial locations along a ray into the scene from the pixel of the image frame. For each of the spatial locations the scene representation neural network 110 processes the representation of the frame time, the representation of the viewing direction, and the representation of the spatial location, to generate the scene representation output 118. The scene representation output 118 defines the light level emitted from the spatial location along the viewing direction and the opacity at the spatial location. Then, for each of the spatial locations along the ray, the light level emitted from the spatial location along the viewing direction and the opacity at the spatial location are combined, by the rendering engine 120, to determine a pixel value for the pixel in the image frame. This can also be seen as projecting radiance values from the 3D model of the scene onto the focal surface of a notional camera as described above, taking account of the intervening opacity. There is a range of rendering techniques that may be used; e.g. the pixel value (for a color) may comprise a weighted average of the emitted light levels along the ray, weighted by the accumulated opacity values.

In some implementations the scene representation neural network 110 learns a 3D model of the scene because it is conditioned on the representation of spatial locations along the viewing directions, and because the scene representation outputs dependent on these are combined as described above to render a 2D image. That is, during training the scene representation neural network 110 is conditioned on representations of the 3D spatial location in the scene, as well as on representations of the viewing direction and of the respective source video frame time, and the scene representation outputs are then used to render a 2D image as described. By training the scene representation neural network 110 to reproduce each of the set of source video frames in this way the scene representation neural network 110 constructs a 3D model of a scene represented by the set of source video frames. It is not essential to this process that the scene representation neural network has any particular architecture: the advantages described herein flow from the types of representations processed and the types of outputs that are generated.

As previously mentioned, in some implementations the scene representation outputs may be used to render a 3D image. As one example, a 3D volume may be rendered by casting rays into the 3D model of the scene from voxels of the 3D volume rather than from pixels of the 2D image. As another example a pixel of a 2D image may include depth information e.g. one channel of the pixel value e.g. a component of a vector of values representing the pixel value, may be a depth value such as a distance to a surface of an object in the 3D model of the scene. In this case the depth value may be determined e.g. from the location of a change in opacity along a ray.

In some implementations the encoded video data may comprise stereoscopic video data i.e. data for a stereoscopic video. Such a stereoscopic video comprises a pair of videos, one intended for presentation to each of a viewer's eyes, the videos being offset from one another such when viewed together the videos combine to give the impression of 3D depth. In such implementations the decoded video may comprise stereoscopic video. The techniques described herein can be applied to stereoscopic video e.g. by encoding the video frames of the pair of videos into the same the scene representation neural network 110 and then decoding a pair of videos using a different set of viewing directions for each eye. That is, the same the scene representation neural network 110 is used to decode a first set of image frames for presentation to a first of the viewer's eyes and to decode a second set of image frames for presentation to a second of the viewer's eyes.

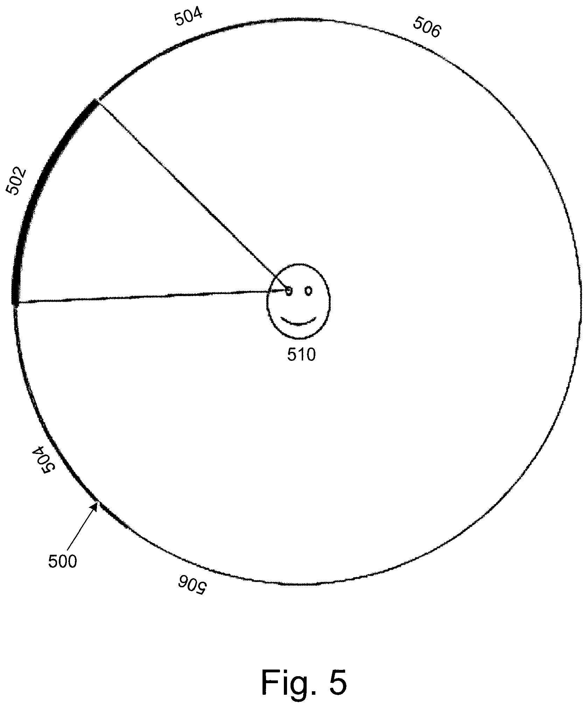

In some implementations the rendered 2D image is an image on a curved, more particularly concave, surface such as part or all of the interior surface of a sphere. The decoded video may be configured for display on the concave surface and for viewing from a point of view directed towards an interior of the concave surface e.g. looking outwards from a center of the sphere. An example of this is shown in Fig. 5, described later.

In such implementations the image frames of the decoded video may be generated by using the scene representation neural network 110 to process representations of viewing directions that originate from the point of view and that are directed towards an interior (concave side) of the concave surface. An image frame may be rendered using viewing directions for pixels of the image frame that are directed from the point of view and there may be no need, for example, to condition the scene representation neural network 110 on representations of the 3D spatial location in the 3D model of the scene.

Thus the rendered 2D image may be considered as an image that would be captured by a notional camera near or at a center of the modelled scene. The viewing directions for the pixels of each image frame may correspond to directions of rays outwards from a point of view for the decoded video that is within a three dimensional spatial volume over which the scene representation neural network encodes a representation of the scene. That is the rays are directed outwards into the scene from a point of view within the scene. The set of image frames may comprise image frames defined on a concave 2D surface around the point of view.

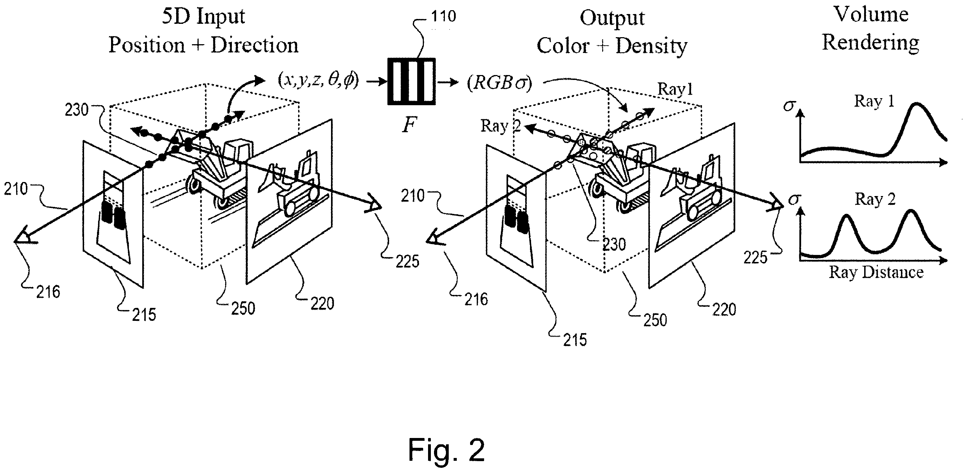

Fig. 2 illustrates the operation of an example scene representation neural network 110 that is configured to process the representation of the frame time, the representation of the viewing direction, and the representation of the spatial location to generate the scene representation output 118.

In the example of Fig. 2 the scene representation neural network 110 represents a 3D scene 250 that is in general unknown at training time. A set of video frames of the encoded video data might comprise video frames 215 and 220 that represent the scene 250 from viewing directions defined by respective rays 210 ("Ray 1") and 230 ("Ray 2") into the scene 250. More particularly the rays 210 and 230 define viewing directions associated with particular pixels of the video frames 215, 220: in general different pixels within a video frame will have slightly different viewing directions. Respective pixels of image frames 215, 230 may be decoded by processing representations of the corresponding viewing directions, such as those defined by respective rays 210, 230, using the scene representation neural network 110. Other image frames may be decoded by processing representations of different groups of viewing directions. The example of Fig. 2 may be considered as depicting a notional camera that pans around the scene over a duration of the set of video frames to obtain the video frames 215, 220.

When video is encoded by training the scene representation neural network 110, and when image frames are decoded, the scene representation neural network 110 is also conditioned on a representation of the source frame time or a representation of a frame time for the decoded video. In the example of Fig. 2 the scene representation neural network 110 is further conditioned on representations of spatial locations, $(x, y, z)$, in the scene. The viewing directions and spatial locations are determined by the locations of pixels of a notional camera viewing the scene, i.e. by the locations of pixels of the video frames (during training/encoding) and by the locations of pixels of the image frames (during decoding). The rays 210, 230 may be chosen to sample the 3D volume 250.

As illustrated the scene representation neural network 110 (F) receives spatial locations defined by coordinates $(x, y, z)$, e.g. normalized in a range [+1, -1], and a viewing direction e.g. defined as a two-dimensional vector $(\theta, \phi)$ in a spherical coordinate system or defined as a three-dimensional unit vector d. Not shown explicitly in Fig. 2, the scene representation neural network 110 also receives the representation of the frame time.

The scene representation neural network 110 generates the scene representation output $(R, G, B, \sigma)$ comprising a radiance for each color, c, along the viewing direction and an opacity (a-value), $\sigma$. Floating point color or opacity values may be generated for increased dynamic range.

For each position along each ray 210, 230, the radiance for each color, c, along the viewing direction and the opacity, $\sigma$, are accumulated along the viewing direction to render a pixel value 216, 225 in the video frame or image frame. The rendering may be performed using computer graphics techniques. For example a ray, $r$, may be defined as $r = o + td$ where $t$ is a parameter that defines a distance along the ray and o is an origin of the ray i.e. a pixel of an image to be constructed. The origin and direction of the ray may be determined based on the location of the notional camera and a focal length of the camera (which may be determined e.g. based on a notional field of view). An estimate of the expected color of a pixel, $\hat{C}(r)$ can then be determined e.g. from

$$\hat{C}(r) = \sum_{i=1}^{N} T_i(1 - \exp(-\sigma_i\delta_i))c_i$$ where N is a number of samples i along the ray,

$$T_i = \exp\left(-\sum_{j=1}^{i-1}\sigma_j\delta_j\right)$$, and $\delta_i = t_{i+1} - t_i$ is a distance between adjacent samples. During training a loss may be computed as a difference between a ground truth image (video frame), $I$, with ground truth pixel values $C(r)$ and an image, $I$, reconstructed from the estimated pixel colors $\hat{C}(r)$, e.g. as a squared error $\sum_{pixels}|\hat{C}(r) - C(r)|^2$. The scene representation neural network 110 may be trained by backpropagating gradients of such a loss to update parameters of the scene representation neural network 110, e.g. using an optimizer such as Adam. The scene representation neural network 110 may comprise e.g. an MLP with e.g. 3 to 20 layers.

In implementations the viewing direction is defined using spherical coordinates $(\theta, \phi)$ where $0° \le \theta \le 180°$ and $0° \le \phi \le 360°$. In implementations the frame time $0 \le t \le 1$, where $t = 0$ corresponds to the initial key frame of a set of source video frames and $t = 1$ to the final key frame of the set of source video frames. That is, the set of source video frames may comprise the video frames between a pair of key frames at, respectively, $t = 0$ and $t = 1$. In implementations the scene representation neural network 110 may receive and process representations of input variables $(x, y, z)$, $(\theta, \phi)$, and $t$. For example each representation may be determined by applying a function $circ(\cdot)$ to the respective input variable where

$$circ(\cdot) = \begin{pmatrix} \sin(2^0\pi \cdot) \\ \cos(2^0\pi \cdot) \\ ... \\ \sin(2^{L-1}\pi \cdot) \\ \cos(2^{L-1}\pi \cdot) \end{pmatrix}$$

and L is a hyperparameter that defines a number of components of the representation, e.g. $1 \le L \le 100$. Representing the input variables in this way can help improve the representation of high frequency spatial or temporal detail. In some implementations the scene representation neural network 110 comprises two neural networks that process the same input variables, one processing a coarse set of 3D points and another a finer set of 3D points, their outputs being combined to render an image.

A scene representation neural network 110 configured to encode a representation of a scene over a 3D spatial volume, and the training and use of such a neural network, may be based on an extension to the time dimension of the techniques described in Mildenhall et al., "NeRF: Representing scenes as neural radiance fields for view synthesis", arXiv:2003.08934; or on an extension to the time dimension of Barron et al. "Mip-NeRF: A Multiscale Representation for Anti-Aliasing Neural Radiance Fields", arXiv:2103.13415; or on an extension to the time dimension of Kosiorek et al., "NeRF-VAE: A Geometry Aware 3D Scene Generative Model".

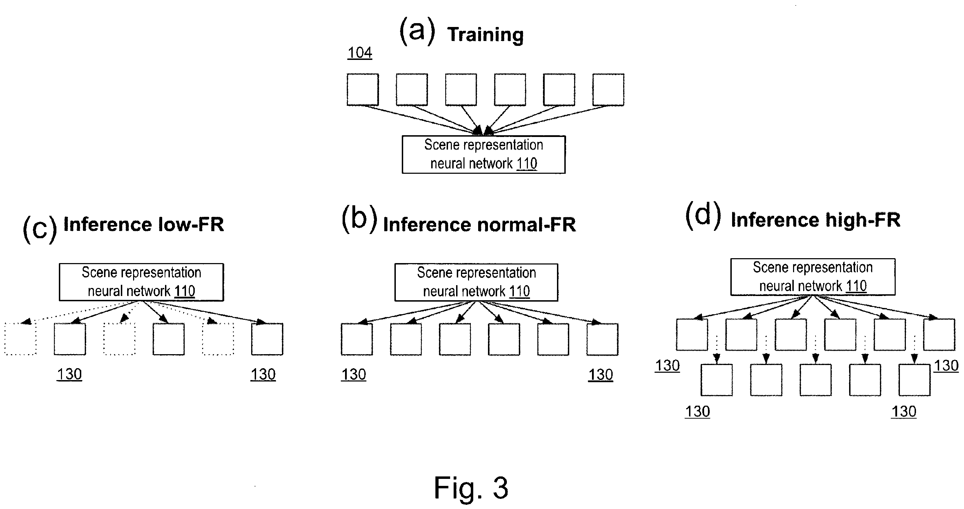

Fig. 3 schematically illustrates encoding and decoding video using a variable frame rate. Fig. 3a schematically illustrates a set of video frames 104 being used to train a scene representation neural network 110, e.g. as described above, to encode the set of video frames between a pair of key frames, for use in predicting pixel colors from a frame time and optionally viewing directions and spatial locations. A scene representation neural network 110 trained in this way is herein an encoder scene representation neural network.

Once trained, the encoded video is made available by providing, for each set of video frames, the parameters of the trained (encoder) scene representation neural network 110 and, optionally, a time stamp for one of the pair of key frames, e.g. the first key frame of the pair (the other key frame is then provided by the next set of video frames). Where a time stamp for each key frame is available the video encoding rate may be adjusted during encoding. The encoded video may be made available from storage or by transmitting, e.g. streaming, the encoded video to the video decoding system 100.

A video encoding data rate can be determined, e.g. as part of the encoding process, by determining a time interval between successive pairs of key frames. This time interval may be determined for a complete encoded video e.g. at encoding, or it may be varied dynamically e.g. according to a content of the encoded video. For example when encoding a relatively static portion of video a longer time interval between successive pairs of key frames may be used than when the content is changing faster, according to any suitable metric.

Fig. 3b schematically illustrates use of the scene representation neural network 110 in inference, to decode image frames 130 for the decoded video. In some implementations a baseline or "normal" frame rate is established by determining a baseline (minimum) period between decoded image frames, $\Delta t$, e.g. based on a content of the video. In some implementations the baseline frame rate may be provided, directly or indirectly, by metadata in the encoded video. For example the encoded video may include metadata that defines a level of temporal detail in the encoded video. For example the encoded video may include metadata that defines a level of detail in a difference between two or more source video frames.

The video decoding system 100 may determine a baseline or "normal" frame rate for decoding the encoded video e.g. using the metadata in the encoded video. A baseline or "normal" frame rate determined in this way may be static, i.e. fixed, or dynamic, i.e. it may change with a time position in the video. It may, but need not be, the same as a frame rate of the video frames of the encoded video.

Fig. 3b illustrates video decoding is at the baseline or normal frame rate. In this case the frame times for the decoded image frames 130 may be obtained by dividing the interval between each successive pair of key frames, i.e. the interval between a starting key frame for a set of video frames and an ending key frame for the set of video frames, by $\Delta t$. The image frames 130 are decoded using the parameters of the scene representation neural network 110 for the corresponding set of video frames.

Some implementations of the video decoding system 100 determine a frame rate for the video, e.g. using metadata in the encoded video that defines a level of temporal detail in the encoded video, and then determine the number of video frames in each set of video frames dependent upon the frame rate. The level of temporal detail in the encoded video may represent a rate of change of content of the encoded video; it may be determined, e.g., by counting a number of changed pixels between one frame and another.

Figs. 3c and 3d schematically illustrate use of the scene representation neural network 110 to decode image frames 130 for the decoded video at, respectively, a reduced frame rate and an increased frame rate. Since image frames are decoded by providing a representation of the frame time to the scene representation neural network 110, decoding at a reduced (respectively increased) frame rate can be achieved by subdividing the time interval between pairs of key frames into fewer (respectively more) frame times. The scene representation neural network 110 is able to generate image frames at an arbitrary frame rate.

Some implementations of the video decoding system 100 determine a level of temporal detail in the decoded video, e.g. a metric rate of change of content of the decoded video, e.g. by counting a number of changed pixels between one decoded image frame and another. The video decoding system 100 may then determine the frame times for the decoded image frames 130 dependent upon such a metric, and may then adjust a time interval between successive image frames of the decoded video to decrease the time interval when the metric indicates an increased rate of change, e.g. by comparison with a threshold rate of change; and vice-versa.

In implementations this may involve rendering a first set of image frames, one for each of a corresponding first set of frame times, then determining the metric of the level of temporal detail in the decoded video and, in response, determining one or more additional frame times temporally between successive frame times of the first set of frame times. The video decoding system may then render one or more additional image frames corresponding to the additional frame times by processing representations of the additional frame times, and optionally viewing direction, and further optionally spatial locations, as previously described, using the scene representation neural network. That is, the rendered set of image frames for the decoded video may comprise the first set of image frames and the additional image frame(s). Such an approach may be recursively (iteratively) extended e.g. to add one or more further additional frames between the additional frames. The inclusion of additional image frames in the rendered set of image frames may be implemented using look-ahead, e.g. a look ahead buffer, to delay the decoded video sufficiently for the level of temporal detail, i.e. changes in the image frames of the decoded video, to be determined and any additional image frames included.

In some implementations of the above approach only parts, e.g. one or more areas, of the additional image frames are rendered, in particular those part(s) determined by the metric to have an increased rate of change. That is, image frames for the decoded video may have a variable spatial as well as, or instead of, a variable temporal resolution.

In a similar way to that described for variable temporal resolution, in some implementations a baseline spatial resolution is established e.g. during encoding of the video, or by the video decoding system 100 during generation of the decoded video. The baseline spatial resolution may based, e.g., on a content of the video, e.g. on a metric of a level of spatial detail of the encoded video frames or of the decoded image frames; or on a target image display system on which the decoded video is to be displayed, e.g. it may be a level of spatial resolution that is the same as a spatial resolution of the target image display system to within a factor n where e.g. $0.5 \leq n \leq 2$ or $0.1 \leq n \leq 10$. The baseline spatial resolution may be defined directly or as angles $\Delta\theta$ and $\Delta\phi$. The baseline spatial resolution may define a default spatial resolution for a rendered image frame, e.g. a spatial resolution to be used for an image frame, or for part of an image frame, e.g. a part of an image frame defined by a user's field of field as described later. In some implementations the baseline spatial resolution, and/or the baseline temporal spatial resolution, may be predetermined.

Whether or not a baseline spatial resolution is defined, some implementations of the video decoding system 100 vary the spatial resolution so that different areas of the image frame are rendered at different spatial resolutions. As one example, the image frame may be subdivided into regularly shaped areas and then a spatial resolution for rendering each area determined. As another example part of the image frame, e.g. a part defined by the user's field of view or gaze direction, may be defined as a region for rendering at increased resolution.

The video decoding system 100 may determine one or more increased spatial resolution areas of the image frame to be rendered at a higher spatial resolution than other areas of the image frame. These areas may be identified in metadata that is part of the encoded video data, that is these areas may be identified during encoding of the video frames. In some implementations, but not necessarily, this metadata may be encoded into the scene representation neural network 110 e.g. during training, e.g. as an additional channel of data represented by the scene representation neural network 110. That is the scene representation output may include the metadata, and the scene representation neural network 110 may process the viewing direction to generate this metadata.

The video decoding system 100 may read this metadata to determine the one or more increased spatial resolution areas. Also or instead the video decoding system 100 may identify the one or more increased spatial resolution areas of the image frame as areas with a relatively higher level of spatial detail as determined by any suitable metric. One example of a metric of spatial detail is the "variance of Laplacian" metric: The Laplacian of an image or image region is calculated. This effectively measures the sharpness of edges, and if the variance of the Laplacian is low then few sharp edges are present. The variance may be compared to a threshold level to determine whether a relatively higher level of spatial detail is present.

Determining the one or more increased spatial resolution areas of the image frame may comprises rendering the image frame at a first spatial resolution lower than the higher spatial resolution and determining a level of spatial detail in regions of the image frame rendered at the first spatial resolution. The one or more increased spatial resolution areas may be determined as areas that include a region of the image frame rendered at the first spatial resolution that has a relatively higher level of spatial detail than another region of the image frame rendered at the first spatial resolution.

The increased spatial resolution areas may be rendered at a higher spatial resolution by rendering an increased area density of pixels (number of pixels per unit area) for these areas. In implementations this comprises determining an increased number of viewing directions for the increased spatial resolution areas, the increased number of viewing directions corresponding to an increased density of rays into the scene i.e. defining a reduced angular difference between the corresponding viewing directions (smaller $\Delta\theta$ and/or $\Delta\phi$). This may comprise using the scene representation neural network 110 to process the representation of the frame time and the representations of the viewing directions for the image frame including increased spatial resolution area(s), and in implementations the representations of the spatial locations, to generate the scene representation output, and rendering the image frame for the frame time using the scene representation outputs for the pixels of the image frame. Optionally, in applications where a fixed number of output pixels is desired, the image frame may be up-sampled to a common resolution across the image frame.

In some implementations this approach is recursively extended, e.g. to further subdivide the increased spatial resolution areas. This may comprise, for example, determining a level of spatial detail in regions of the one or more increased spatial resolution areas of the image frame and determining one or more further increased spatial resolution areas as one or more areas that include a region of the image frame rendered at the higher spatial resolution that has a higher level of spatial detail than another region of the image frame rendered at the higher spatial resolution. The one or more further increased spatial resolution areas may then be rendered at a further increased spatial resolution that is higher than the higher spatial resolution used for the increased spatial resolution areas.

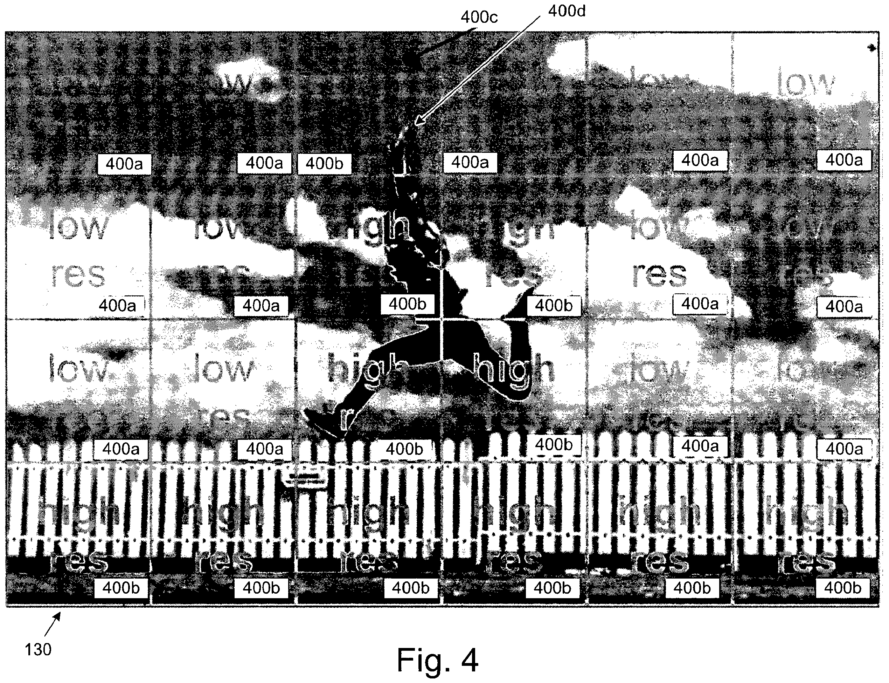

Fig. 4 schematically illustrates decoding video using variable spatial resolution. Thus Fig. 4 shows an example image frame 130 subdivided into subdivided into regularly shaped areas 400. Some of the areas 400a are rendered at the baseline spatial resolution, others 400b are determined, by either the video encoding or decoding process, to include a relatively higher level of detail, and these are rendered at the higher spatial resolution. Some areas 400c are determined, by either the video encoding or decoding process, to include a still higher level of detail, and these are rendered at the further increased spatial resolution. In each case, in implementations, rendering an area 400a-c of the image frame 130 comprises providing (t, $\theta$, $\phi$) triples to the scene representation neural network 110, e.g. for each spatial location along a ray, to render pixels for the area. For areas 400b subdivision in space results in new (t, $\theta$, $\phi$) triples that are in between the existing ones, resulting in increased resolution in those areas. This may be iterated multiple times, e.g. as shown for area 400d, to obtain successively increased resolution areas. Subdivision on this way may continue until e.g. a defined maximum spatial resolution is reached.

Also or instead of this approach to determining increased resolution areas, an increased resolution may be used selectively for a region of an image frame that is within a user's field of view and/or that is defined by the user's gaze direction. Thus determining the one or more increased spatial resolution areas of the image frame may also or instead comprise obtaining a gaze direction for an observer of the image frame, and determining the increased spatial resolution area as a part of the image frame to which the observer is directing their gaze. This approach can be useful e.g. in a virtual reality (VR) or augmented reality (AR) system. In general an increased resolution used for a region of the image frame towards which the observer's gaze is directed may be different to, e.g. higher than, the increased resolution used for an area determined to have a higher level of spatial detail.

Fig. 5 schematically illustrates use of the video decoding system 100 to present an image frame 500 to a user, i.e. viewer, 510 of a virtual reality system. As shown the image frame 500 is distributed over a notional curved surface e.g. part or substantially all of the surface of a sphere. The location of the user 510 defines a point of view for the image frame; this point of view may correspond to a center of curvature of the curved surface e.g. a center of the sphere. In some other implementations the image frame 500 may be distributed over an actual, i.e. physical, curved surface.

Region 502 of the virtual reality image frame 500 is within the user's field of view and is a part of the image frame to which the user is directing their gaze; this may be referred to as a central part of the image frame. In general a VR system includes a gaze direction detection subsystem that can be used to determine such a gaze direction. Region 504 of the virtual reality image frame 500 is still within the user's field of view but represents a peripheral part of their field of view. Region 506 of the virtual reality image frame 500 is outside the user's field of view. Region 502 is rendered at a higher resolution than region 504. In some implementations region 502 has a higher defined maximum spatial resolution than other areas of the image frame.

In some implementations region 506 is not rendered; in some implementations region 506, or a part of region 506 next to region 504, is rendered but at a lower resolution than region 504, e.g. as preparation in case the user changes their gaze direction e.g. by turning their head. Thus region 504, and in implementations part or all of region 506, may be pre-rendered to provide a form of predictive rendering, in case the user changes their gaze direction.

In some implementations, where a user changes their gaze direction optical flow may be used to interpolate between frames i.e. between two image frames in which the spatial resolution varies across the image frames as described. The optical flow-based interpolation can partially compensate for rapid changes in the position of region 502 in the image frame resulting from rapid changes in gaze direction.

In some implementations, the video decoding system 100 selectively renders region 502 at higher temporal resolution. For example the video decoding system 100 may render only part of one or more additional image frames, corresponding to additional frame times temporally between successive frame times of the set of frame times. The part of the one or more additional image frames that is rendered comprises a part to which the observer is directing their gaze, e.g. a central portion of the image frame to which the user (observer) is directing their gaze, such as region 502.

In some implementations the video decoding system 100 is part of a virtual reality (VR) system. VR is a particularly demanding application and even if the displayed video is at high resolution, because the user typically views only a small angular fraction of the entire display the displayed imagery can appear to have a relatively low resolution. Implementations of the described techniques can address this problem. Further, because the described video decoding techniques are relatively computationally inexpensive they can facilitate making better overall use of the computational budget. In VR systems the image frames often have a spherical mapping. In general any mapping can be applied to image frames generated by the described techniques; or the rendering may involve a transform of the projected rays to a spherical coordinate space.

As previously described, image frames for the decoded video may have a variable spatial and a variable temporal resolution. For example, when it is determined that a next image frame should have a higher framerate in a particular area, e.g. as previously described, the image frames may be subdivided in time as well as space. That is, a partial image frame, i.e. an image frame representing an image area that is less that that an image area represented by a complete image frame, may be generated at an increased temporal resolution. For example the partial image frame may be added ("inserted") between two image frames that would otherwise be adjacent in time, e.g. by adding an image frame at a time between $t$ and $t + \Delta t$, e.g. at $t + \Delta t/2$. This need not be done for the full image frame as parts of the image frame may be either static or changing less rapidly. This facilitates focusing available computational resources on regions of the frame that are higher in detail or contain more rapid motion.

In some implementations only regions that the user is looking at are decoded, or are decoded at high temporal and/or spatial resolution. This saves computational resources by not decoding areas of image frames outside the user's field of view at high spatial or temporal resolution, and by not decoding parts of image frames that are mostly static, e.g. in the case of a sports game a field on which the game is played.

Thus in implementations determining the one or more increased spatial resolution areas of the image frame comprises determining partial image frame times for one or more additional partial image frames, each partial image frame comprising one or more increased spatial resolution areas, the partial image frame times defining an increased temporal resolution for the increased spatial resolution areas. The additional partial image frames are rendered by processing the partial image frame times using the using the scene representation neural network. More particularly the scene representation neural network 110 processes representations of the partial image frame times, and representations of the viewing directions for pixels of the additional partial image frames, and optionally representations of spatial locations as described above, to generate the scene representation output 118. Then, for each partial image frame time, the respective additional partial image frame is rendered using the scene representation outputs for the pixels of the additional partial image frame.

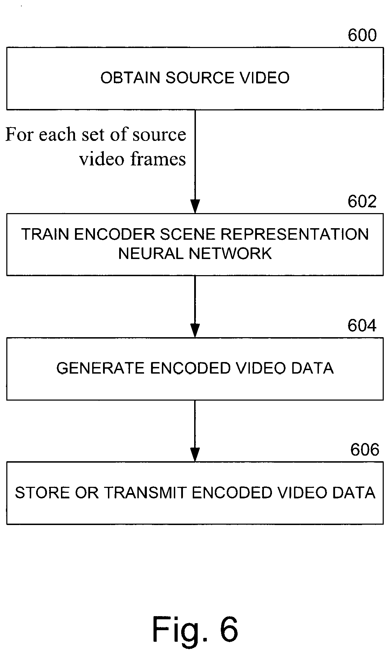

Fig. 6 is a flow diagram of an example process for encoding video as described above to obtain encoded video data. The process may be performed by a system of one or more computers located in one or more locations.

The process obtains source video (step 600) comprising a sequence of sets of source video frames. Each set of source video frames comprises the source video frames between a respective pair of source video key frames. The key frame times may be e.g. at regular time intervals, and or may comprise times when there is greater than a threshold measure of change in a source video frame, e.g. to identify sets of frames between scene cuts.

For each set of source video frames the process trains an encoder scene representation neural network (step 602). In general the encoder scene representation neural network has the same architecture as the scene representation neural network 110. The encoder scene representation neural network is trained on each source video frame of the set of source video frames, to reproduce the source video frame, e.g. by backpropagating gradients of any suitable image frame reconstruction loss, e.g. a squared loss as previously described, to adjust the parameters (e.g. weights) of the encoder scene representation neural network.

More specifically the encoder scene representation neural network is configured to receive a representation of the source frame time for each of the source video frames as well as, in implementations, representations of viewing directions, and optionally spatial locations, as previously described. The encoder scene representation neural network processes these in accordance with values of the parameters of the encoder scene representation neural network to generate an encoder scene representation output. The encoder scene representation output corresponds to the scene representation output 118 described above, and is used for rendering an image that depicts a scene, at the source frame time, encoded by the parameters of the encoder scene representation neural network.

In implementations training the encoder scene representation neural network comprises, for each of the source video frames, processing the representation of the source frame time using the encoder scene representation neural network to generate the encoder scene representation output for the source frame time, and rendering the image that depicts the scene at the source frame time using the encoder scene representation output for the source frame time. The training process then updates the parameters of the encoder scene representation neural network using an objective function that characterizes an error between the source video frame and the rendered the image that depicts the scene at the source frame time.

Thus the encoder scene representation neural network is trained to generate an encoder scene representation output for rendering an image that depicts a scene at a respective source frame time of the source video frame. The scenes depicted by the set of source video frames are encoded into the parameters of the encoder scene representation neural network.

The process generates encoded video data comprising data defining the parameters of the encoder scene representation neural network for each set of source video frames (step 604). Optionally the encoded video data may include additional data (metadata) that defines a time stamp for each key frame. Optionally the encoded video data may include additional data (metadata) that defines a spatial and/or temporal resolution, e.g. a level of detail metric, of one or more images of each set of source video frames, as previously described. The encoded video data may be e.g. stored and/or transmitted for decoding (step 606).

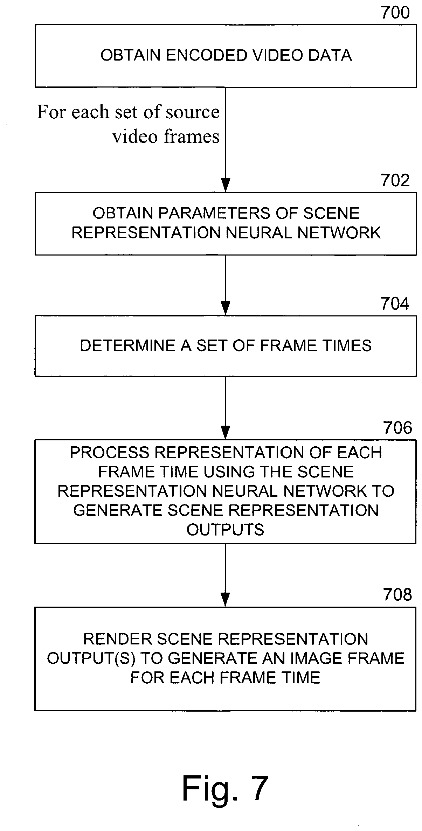

Fig. 7 is a flow diagram of an example process for decoding video as described above to obtain decoded video. The process may be performed by a system of one or more computers located in one or more locations. For example the video decoding system 100 may perform the process of Fig. 7.

The process obtains encoded video data (step 700) for a video comprising a plurality of video frames. The video frames comprise a sequence of sets of video frames as previously described. Each set of video frames comprises the video frames between a respective pair of key frames.

For each set of (source) video frames in the encoded video data the process obtains the parameters of the scene representation neural network 110 that encodes the set of video frames (step 702). The process determines a set of frame times, e.g. as previously described (step 704). The representation of each frame time is then processed by the scene representation neural network 110, optionally in conjunction with viewing directions and spatial locations as previously described, and using the parameters obtained in step 702, to generate one or more scene representation outputs 118 for the frame time (step 706). The scene representation neural network 110 has the same architecture as the encoder scene representation neural network used to encode the scenes depicted by the set of (source) video frames. The parameters obtained are the parameters of the encoder scene representation neural network used to encode the scenes depicted by the set of video frames.

The scene representation output(s) 118 for the frame time are processed to render an image frame for the frame time (step 708). Rendering the image frame may be performed as previously described.

By processing each frame time of the set of frame times in this way a set of image frames is generated for the decoded video. The set of image frames represents the content of the corresponding set of (source) video frames. The decoded video may be e.g. displayed to a user (observer), stored, or transmitted.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A computer-implemented method of decoding video, comprising:

obtaining encoded video data for a video comprising a plurality of video frames, wherein the video frames comprise a sequence of sets of video frames, each set of video frames comprising the video frames between a respective pair of key frames,

wherein the encoded video data for each set of video frames comprises parameters of a scene representation neural network that encodes the video frames between the respective pair of key frames, and

wherein the scene representation neural network is configured to receive a representation of a frame time defining a time between the respective pair of key frames, and to process the representation of the frame time to generate a scene representation output for rendering an image that depicts a scene encoded by the parameters of the scene representation neural network at the frame time; and

for each set of video frames in the encoded video data:

processing a representation of each of a set of frame times between the respective pair of key frames for the set of video frames, using the scene representation neural network configured with the parameters for the set of video frames, to generate the scene representation output for each of the frame times; and

rendering a set of image frames, one for each of the frame times, using the scene representation output for each of the frame times, wherein the set of image frames provides the decoded video.

2. The method of claim 1 wherein the scene representation neural network is further configured to receive a representation of a viewing direction, and to process the representation of the frame time and the representation of the viewing direction to generate the scene representation output for rendering the image; the method further comprising rendering each of the image frames by:

determining a viewing direction for each of a plurality of pixels in the image frame, wherein the viewing direction for a pixel corresponds to a direction of a ray into the scene from the pixel; for each pixel in the image frame, processing the representation of the frame time and the representation of the viewing direction for the pixel, using the scene representation neural network to generate the scene representation output for the pixel and the frame time; and

rendering the image frame for the frame time using the scene representation outputs for the pixels of the image frame.

3. The method of claim 2, wherein the parameters of the scene representation neural network encode a representation of the scene over a three dimensional spatial volume, and wherein the scene representation neural network is further configured to receive a representation of a spatial location in the scene, and to process the representation of the frame time, the representation of the viewing direction, and the representation of the spatial location to generate the scene representation output, and wherein the scene representation output defines a light level emitted from the spatial location along the viewing direction and an opacity at the spatial location; and

wherein rendering each of the image frames comprises, for each pixel in the image frame:

determining a plurality of spatial locations along the ray into the scene from the pixel; for each of the spatial locations, processing the representation of the frame time, the representation of the viewing direction, and the representation of the spatial location, using the scene representation neural network, to generate the scene representation output, wherein the scene representation output defines the light level emitted from the spatial location along the viewing direction and the opacity at the spatial location; and

combining, for the spatial locations along the ray, the light level emitted from the spatial location along the viewing direction and the opacity at the spatial location, to determine a pixel value for the pixel in the image frame.

4. The method of claim 2, wherein the set of image frames comprise image frames defined on a concave 2D surface, and wherein the viewing direction for a pixel corresponds to a direction of a ray outwards from a point of view for the decoded video that is within the three dimensional spatial volume.

5. The method of claim 2, 3 or 4, wherein rendering one of the image frames further comprises:

determining one or more increased spatial resolution areas of the image frame to be rendered at a higher spatial resolution than one or more other areas of the image frame; and

rendering the one or more increased spatial resolution areas at the higher spatial resolution by rendering an increased area density of pixels for the one or more increased spatial resolution areas, rendering the increased area density of pixels comprising

determining an increased number of viewing directions for the increased spatial resolution areas, the increased number of viewing directions corresponding to an increased density of rays into the scene compared to the one or more other areas of the image frame, the increased density of rays into the scene defining a reduced angular difference between the corresponding viewing directions.

6. The method of claim 5, wherein determining the one or more increased spatial resolution areas of the image frame comprises:

rendering the image frame at a first spatial resolution lower than the higher spatial resolution;
determining a level of spatial detail in regions of the image frame rendered at the first spatial resolution; and
determining the one or more increased spatial resolution areas as one or more areas that include a region of the image frame rendered at the first spatial resolution that has a higher level of spatial detail than another region of the image frame rendered at the first spatial resolution.

7. The method of claim 6, further comprising:

determining a level of spatial detail in regions of the one or more increased spatial resolution areas of the image frame;
determining one or more further increased spatial resolution areas as one or more areas that include a region of the image frame rendered at the higher spatial resolution that has a higher level of spatial detail than another region of the image frame rendered at the higher spatial resolution; and
rendering the one or more further increased spatial resolution areas at a further increased spatial resolution that is higher than the higher spatial resolution.

8. The method of any one of claims 5-7 wherein determining the one or more increased spatial resolution areas of the image frame comprises:

obtaining a gaze direction for an observer of the image frame;
determining the increased spatial resolution area of the image frame, using the gaze direction, as a part of the image frame to which the observer is directing their gaze.

9. The method of any preceding claim, further comprising:

ing:

determining a frame rate for the video; and
determining the number of video frames in each set of video frames dependent upon the frame rate.

10. The method of any preceding claim, comprising determining the frame times dependent upon a metric of a rate of change of content of the video, such that a time interval between successive image frames of the decoded video is decreased when the metric indicates an increased rate of change.

11. The method of claim 10, wherein determining the frame times comprises:

rendering a first set of image frames, one for each of a first set of frame times;
in response to the metric, determining one or more additional frame times temporally between successive frame times of the first set of frame times; and
rendering one or more additional image frames corresponding to the additional frame times by processing representations of the additional frame times using the scene representation neural network.

12. The method of claim 11, wherein rendering one or more additional image frames corresponding to the additional frame times comprises rendering only part of the additional image frames that is determined by the metric to have an increased rate of change.

13. The method of any preceding claim, comprising:

obtaining a gaze direction for an observer of the image frames; and
rendering part of one or more additional image frames corresponding to additional frame times temporally between successive frame times of the set of frame times, by processing representations of the additional frame times using the scene representation neural network;
wherein the part of the one or more additional image frames comprises at least a part to which the observer is directing their gaze.

14. The method of any preceding claim when dependent upon claim 5, wherein determining the one or more increased spatial resolution areas of the image frame further comprises:

determining partial image frame times for one or more additional partial image frames, wherein each partial image frame comprises the one or more increased spatial resolution areas, and wherein the partial image frame times define an increased temporal resolution for the increased spatial resolution areas; and

rendering the additional partial image frames by processing the partial image frame times using the using the scene representation neural network, wherein the processing comprises:

processing representations of the partial image frame times and the representations of the viewing directions for pixels of the additional partial image frames using the scene representation neural network to generate the scene representation output, and

rendering, for each partial image frame time, the respective additional partial image frame using the scene representation outputs for the pixels of the additional partial image frame.

15. A method of storing or transmitting video using the method of any preceding claim, comprising:

obtaining source video, the source video comprising a sequence of sets of source video frames defined by source video key frames, each set of source video frames comprising the source video frames between a respective pair of source video key frames;

encoding the source video to obtain the encoded video data, wherein encoding the source video comprises, for each set of source video frames between a respective pair of source video key frames:

training an encoder scene representation neural network using each of the source video frames of the source video between the respective pair of source video key frames, to generate an encoder scene representation output for rendering an image that depicts a scene at a respective source frame time of the source video frame, wherein the encoder scene representation neural network has the same architecture as the scene representation neural network and the scene is encoded by parameters of the encoder scene representation neural network;

storing or transmitting the encoded video data; and

decoding the encoded video data using the method of any preceding claim.

16. A computer-implemented method of encoding video, comprising:

obtaining source video, the source video comprising a sequence of sets of source video frames, each set of source video frames comprising the source video frames between a respective pair of source video key frames;

encoding the source video to obtain encoded video data, wherein encoding the source video comprises, for each set of source video frames between a respective pair of source video key frames:

training an encoder scene representation neural network using each of the source video frames of the source video between the respective pair of source video key frames, to generate an encoder scene representation output for rendering an image that depicts a scene at a respective source frame time of the source video frame, wherein the scene is encoded by parameters of the encoder scene representation neural network; and

storing or transmitting the encoded video data.

17. The method of claim 16 wherein the encoder scene representation neural network is configured to receive a representation of the source frame time, and to process the representation of the source frame time to generate the encoder scene representation output for rendering an image that depicts a scene encoded by the parameters of the encoder scene representation neural network at the source frame time; and wherein the training comprises, for each of the source video frames:

processing the representation of the source frame time using the encoder scene representation neural network to generate the encoder scene representation output for the source frame time;

rendering the image that depicts the scene at the source frame time using the encoder scene representation output for the source frame time; and

updating the parameters of the encoder scene representation neural network using an objective function that characterizes an error between the source video frame and the rendered the image that depicts the scene at the source frame time.

18. One or more non-transitory computer storage media storing instructions that when executed by one or more computers cause the one or more computers to perform operations of the respective method of any one of claims 1-17.

19. A system comprising:

one or more computers; and
one or more storage devices communicatively coupled to the one or more computers, wherein the one or more storage devices store instructions that, when executed by the one or more computers, cause the one or more computers to perform operations of the respective method of any one of claims 1-17.

20. An augmented reality or virtual reality system comprising the system of claim 19.

Key frame time; neural network parameters 104c

Key frame time; neural network parameters 104b

Key frame time; neural network parameters 104a

Encoded video 102

Scene representation neural network 110

Frame time 112

Viewing direction 114

Spatial location 116

118

Rendering engine 120

Image frame 130 for decoded video

100

Fig. 1

Fig. 2

Fig. 3

Fig. 4

Fig. 5

600

```
┌─────────────────────────────────────────┐
│           OBTAIN SOURCE VIDEO            │
└─────────────────────────────────────────┘
```

For each set of source
video frames

602

```
┌─────────────────────────────────────────┐
│  TRAIN ENCODER SCENE REPRESENTATION      │
│            NEURAL NETWORK                 │
└─────────────────────────────────────────┘
```

604

```
┌─────────────────────────────────────────┐
│        GENERATE ENCODED VIDEO DATA        │
└─────────────────────────────────────────┘
```

606

```
┌─────────────────────────────────────────┐
│    STORE OR TRANSMIT ENCODED VIDEO DATA   │
└─────────────────────────────────────────┘
```

# Fig. 6

700

```
┌─────────────────────────────────────────┐
│         OBTAIN ENCODED VIDEO DATA         │
└─────────────────────────────────────────┘
```

For each set of source
video frames

702

```
┌─────────────────────────────────────────┐
│       OBTAIN PARAMETERS OF SCENE          │
│    REPRESENTATION NEURAL NETWORK          │
└─────────────────────────────────────────┘
```

704

```
┌─────────────────────────────────────────┐
│       DETERMINE A SET OF FRAME TIMES      │
└─────────────────────────────────────────┘
```

706

```
┌─────────────────────────────────────────┐
│    PROCESS REPRESENTATION OF EACH         │
│       FRAME TIME USING THE SCENE          │
│  REPRESENTATION NEURAL NETWORK TO         │
│    GENERATE SCENE REPRESENTATION          │
│               OUTPUTS                     │
└─────────────────────────────────────────┘
```

708

```
┌─────────────────────────────────────────┐
│     RENDER SCENE REPRESENTATION           │
│ OUTPUT(S) TO GENERATE AN IMAGE FRAME      │
│           FOR EACH FRAME TIME             │
└─────────────────────────────────────────┘
```

# Fig. 7

Europäisches
Patentamt

European
Patent Office

Office européen
des brevets

# EUROPEAN SEARCH REPORT

Application Number

EP 22 38 6027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | MILDENHALL BEN ET AL: "NeRF: Representing Scenes as Neural Radiance Fields for View Synthesis", 3 November 2020 (2020-11-03), ARXIV.ORG, PAGE(S) 405 – 421, XP047569510, * the whole document * | 1-20 | INV. G06N3/04 H04N19/31 H04N19/33 |
| X | HAO CHEN ET AL: "NeRV: Neural Representations for Videos", ARXIV.ORG, CORNELL UNIVERSITY LIBRARY, 201 OLIN LIBRARY CORNELL UNIVERSITY ITHACA, NY 14853, 26 October 2021 (2021-10-26), XP091082566, * the whole document * | 1-20 | |
| A,D | BARRON JONATHAN T ET AL: "Mip-NeRF: A Multiscale Representation for Anti-Aliasing Neural Radiance Fields", 2021 IEEE/CVF INTERNATIONAL CONFERENCE ON COMPUTER VISION (ICCV), IEEE, 10 October 2021 (2021-10-10), pages 5835-5844, XP034092740, DOI: 10.1109/ICCV48922.2021.00580 [retrieved on 2022-02-10] * section 2.1 * | 1-20 | TECHNICAL FIELDS SEARCHED (IPC) G06N H04N |
| A | US 2020/301506 A1 (YOUNG ANDREW [US] ET AL) 24 September 2020 (2020-09-24) * paragraph [0059] – paragraph [0062] * * paragraph [0073] * * paragraph [0078] – paragraph [0079] * | 1-20 | |

-/--

The present search report has been drawn up for all claims

| Place of search | Date of completion of the search | Examiner |
|---|---|---|
| The Hague | 13 October 2022 | Ferré, Pierre |

EPO FORM 1503 03.82 (P04C01)

Europäisches
Patentamt

European
Patent Office

Office européen
des brevets

**EUROPEAN SEARCH REPORT**

Application Number

EP 22 38 6027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MARTIN B?HME ET AL: "Gaze-contingent temporal filtering of video", EYE TRACKING RESEARCH & APPLICATIONS, ACM, 2 PENN PLAZA, SUITE 701 NEW YORK NY 10121-0701 USA, 27 March 2006 (2006-03-27), pages 109-115, XP058119399, DOI: 10.1145/1117309.1117353 ISBN: 978-1-59593-305-8 * sections 1 and 2 * | 1-20 | |
| A | US 2021/142520 A1 (KRISHNAN RATHISH [US] ET AL) 13 May 2021 (2021-05-13) * paragraph [0045] - paragraph [0048] * * paragraph [0067] * | 1-20 | |
| A | DU YILUN ET AL: "Neural Radiance Flow for 4D View Synthesis and Video Processing", 2021 IEEE/CVF INTERNATIONAL CONFERENCE ON COMPUTER VISION (ICCV), IEEE, 10 October 2021 (2021-10-10), pages 14304-14314, XP034093767, DOI: 10.1109/ICCV48922.2021.01406 [retrieved on 2022-02-10] | 1-20 | |
| A | US 9 552 623 B1 (CHENG GUOHUA [CN] ET AL) 24 January 2017 (2017-01-24) * column 5, line 21 - line 29 * | 1-20 | TECHNICAL FIELDS SEARCHED (IPC) |

The present search report has been drawn up for all claims

| Place of search | Date of completion of the search | Examiner |
|---|---|---|
| The Hague | 13 October 2022 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 22 38 6027

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2022

| Patent document cited in search report | | Publication date | Patent family member(s) | | Publication date |
|---|---|---|---|---|---|
| US 2020301506 | A1 | 24-09-2020 | US | 2017285736 A1 | 05-10-2017 |
| | | | US | 2019361526 A1 | 28-11-2019 |
| | | | US | 2020301506 A1 | 24-09-2020 |
| | | | US | 2021303067 A1 | 30-09-2021 |
| | | | US | 2022197381 A1 | 23-06-2022 |
| US 2021142520 | A1 | 13-05-2021 | CN | 115053047 A | 13-09-2022 |
| | | | EP | 4058653 A1 | 21-09-2022 |
| | | | US | 2021142520 A1 | 13-05-2021 |
| | | | WO | 2021096644 A1 | 20-05-2021 |
| US 9552623 | B1 | 24-01-2017 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MILDENHALL et al.** NeRF: Representing scenes as neural radiance fields for view synthesis. *arXiv:2003.08934*

- **BARRON et al.** Mip-NeRF: A Multiscale Representation for Anti-Aliasing Neural Radiance Fields. *arXiv:2103.13415*
- **KOSIOREK et al.** *NeRF-VAE: A Geometry Aware 3D Scene Generative Model*